# EUROPEAN PATENT APPLICATION

(11) **EP 3 291 492 A1**
(43) Date of publication of application: **07.03.2018**
(21) Application number: 17178718.7
(22) Date of filing: 29.06.2017
(51) Int. Cl.: H04L 12/26, H04L 12/24, H04L 12/721

(54) **METHOD AND ASSOCIATED CONTROL APPARATUS FOR CONTROLLING A CLIENT DEVICE TO ACCESS A NETWORK DEVICE**

(30) Priority: 31.08.2016 TW 105128021
(71) Applicant: Synology Incorporated, Taipei 103 (TW)
(72) Inventor: Hsiao, Ping-Che, Taipei City 114 (TW); Liu, Jia-Yu, New Taipei City 238 (TW)
(74) Representative: Becker Kurig Straus

(57) **Abstract**

A method and associated control apparatus (120, 122) for controlling a client device (110) to access a network device (130DS) in a network system (100) are provided, where the method includes: performing at least one preparation operation regarding the network device (130DS) to obtain network connection reference information of the network device (130DS); based on the network connection reference information, performing a plurality of network connection test operations on the network device (130DS) according to a plurality of network connection strategies, respectively, to generate a plurality of test results respectively corresponding to the network connection strategies, wherein at least one test result of the test results indicates feasibility of at least one of the network connection strategies; and providing the client device (110) with at least one portion of the network connection reference information to allow the client device (110) to establish a network connection between the client device (110) and the network device (130DS) according to an optimal strategy.

## Description

### Field of the Invention

The present invention relates to a method and associated control apparatus for controlling a client device to access a network device according to the pre-characterizing clauses of claims 1 and 15.

### Background of the Invention

When both a client device and a network are in the same intranet, the client device may link to the network device via broadcasting in order to access data. Regarding broadcasting, data transmitted by the client device will be received by each network device in the same intranet, and the network device that receives the data will refer to the destination and source addresses recorded in the data to decide whether to respond to the client device. The above scheme may encounter some inherent limitations. For example, when the client device is not in the intranet, the client device cannot link to the network device via broadcasting. Attempting to solve the above problem may result in unwanted side effects being introduced. For example, when the user executes a browser on the client device and tries to link via the browser, operations of the client device will be limited by the security limitations of the browser. If the user executes a HyperText Transfer Protocol Secure (HTTPS) request via the browser, the user must preinstall a specific certificate on the client device, such as the Secure Sockets Layer (SSL) certificate; under a situation where the certificate is not installed, the HTTPS request will not be granted and the client device will fail to link. In another example, when whether the network device is under a network address translate (NAT) device (e.g. a router) is unknown, the client device will have to try many linking ways to find a proper linking way. Thus, how to properly correct the existing problems without introducing unwanted side effects, or in a way that is less likely to introduce a side effect, has become an important issue to be solved.

### Summary of the Invention

This in mind, the present invention aims at providing a method and associated control apparatus for controlling a client device to access a network device, in order to solve the problems of the related arts and/or allow the client device at any of various locations to directly link to the network device without the need for trial and error.

This is achieved by a method and associated control apparatus for controlling a client device to access a network device according to the pre-characterizing clauses of claims 1 and 15. The dependent claims pertain to corresponding further developments and improvements.

In one aspect, the disclosure features a method for controlling a client device to access a network device in a network system, in which the method is applicable to an electronic device, such as a server. For example, the electronic device may be a web server. The method may include: performing at least one preparation operation regarding the network device to obtain network connection reference information of the network device; based on the network connection reference information, performing a plurality of network connection test operations on the network device according to a plurality of network connection strategies, respectively, to generate a plurality of test results respectively corresponding to the network connection strategies, in which at least one test result of the test results indicates feasibility of at least one of the network connection strategies; and providing the client device with at least one portion of the network connection reference information to allow the client device to establish a network connection between the client device and the network device according to an optimal strategy within a set of strategies, in which the set of strategies include the network connection strategies. In some embodiments, the present invention provides a control apparatus. The control apparatus may be configured to operate according to the above method, in which the control apparatus may include at least one portion (e.g. a portion or all) of the electronic device. For example, the above-mentioned at least one portion of the electronic device may include a processing circuit, and the processing circuit may be configured to control the operations of the electronic device according to the above method.

In one aspect, the disclosure features a control apparatus for controlling a client device to access a network device, in which the control apparatus may include at least one portion (e.g. a portion or all) of an electronic device. The electronic device may be a server, such as a web server. The control apparatus may include a processing circuit, in which the processing circuit is positioned in the electronic device, and is arranged to control operations of the electronic device. For example, the processing circuit may control the electronic device to perform at least one preparation operation regarding the network device in order to obtain the network connection reference information of the network device. Further, based on the network connection reference information, the processing circuit may control the electronic device to perform a plurality of network connection test operations upon the network device according to a plurality of network connection strategies, respectively, to generate a plurality of test results respectively corresponding to the network connection strategies, in which at least one test result within the test results indicates feasibility of at least one of the network connection strategies. In addition, the processing circuit may control the electronic device to provide the client device with at least one portion of the network connection reference information to allow the client device to establish a network connection between the client device and the network device according to an optimal strategy within a set of strategies, in which the set of strategies include the network connection strategies.

In one aspect, the disclosure features a control apparatus, in which the control apparatus may include at least one portion (e.g. a portion or all) of a client device. For example, the control apparatus may include a processing circuit, and the processing circuit is positioned in the client device. The processing circuit may be arranged to control operations of the client device in order to access a network device, in which an electronic device may perform at least one preparation operation regarding the network device to obtain network connection reference information of the network device. The electronic device may be a server, such as a web server. Based on the network connection reference information, the electronic device performs a plurality of network connection test operations upon the network device according to a plurality of network connection strategies, respectively, to generate a plurality of test results respectively corresponding to the network connection strategies, in which at least one test result within the test results indicates feasibility of at least one of the network connection strategies. In addition, the processing circuit controls the client device to transmit a request to the electronic device to make the electronic device provide at least one portion of the network connection reference information to the client device. This allows the client device to establish a network connection between the client device and the network device according to an optimal strategy within a set of strategies, in which the set of strategies include the network connection strategies.

The method and the associated control apparatus may solve problems existing in the related arts without introducing unwanted side effects, or in a way that is less likely to introduce a side effect. Further, the method and associated control apparatus of the present invention may effectively enhance the overall efficiency of the system. Based on the architecture of the present invention, the client device may directly establish a network connection at any of various locations to access the network device without the need for trial and error. Further, when the client device is unable to test the connection between the network device and the client device, the architecture of the present invention can still operate normally. In addition, the method and associated control apparatus of the present invention may select an optimal connecting method based on the environment, allowing the network connection to quickly be established, thus saving time for users.

### Brief Description of the Drawings

In the following, the invention is further illustrated by way of example, taking reference to the accompanying drawings. Thereof
FIG. 1 is a diagram of a network system according to an embodiment of the present invention,
FIG. 2 illustrates some implementation details of the web server shown in FIG. 1 according to an embodiment of the present invention,
FIG. 3 illustrates some implementation details of the client device shown in FIG. 1 according to an embodiment of the present invention,
FIG. 4 illustrates some preparation operations of a method for controlling a client device to access a network device according to an embodiment of the present invention,
FIG. 5 illustrates a connection test operation of the method according to an embodiment of the present invention,
FIG. 6 illustrates some implementation details of the method according to an embodiment of the present invention,
FIG. 7 illustrates a network connection operation of the method according to an embodiment of the present invention,
FIG. 8 illustrates a work flow of the method according to an embodiment of the present invention, and
FIG. 9 illustrates a network connection operation of the method according to another embodiment of the present invention.

### Detailed Description

One or more embodiments of the present invention provide a method and associated control apparatus for controlling a client device to access a network device in a network system. The network system may include an electronic device such as a server, and may also include at least one network device (e.g. one or more network devices) and a plurality of client devices, in which each client device within the client devices is capable of linking to the electronic device (e.g. the server). The electronic device may be a web server. More particularly, the network device may include a plurality of network devices.

Examples of the network devices may include (but are not limited to): network storage devices, such as Network Attached Storage (NAS) servers and any of various types of servers. Examples of the client devices may include (but are not limited to): multifunctional mobile phones, tablets, wearable devices, and personal computers (PCs), such as laptop computers and desktop computers. The communications architecture implemented based on the methods and control apparatuses of the present invention may improve the user experience. This is because it is unnecessary to install certificates at the client devices in advance, and the client devices do not require the various complicated settings of the related arts.

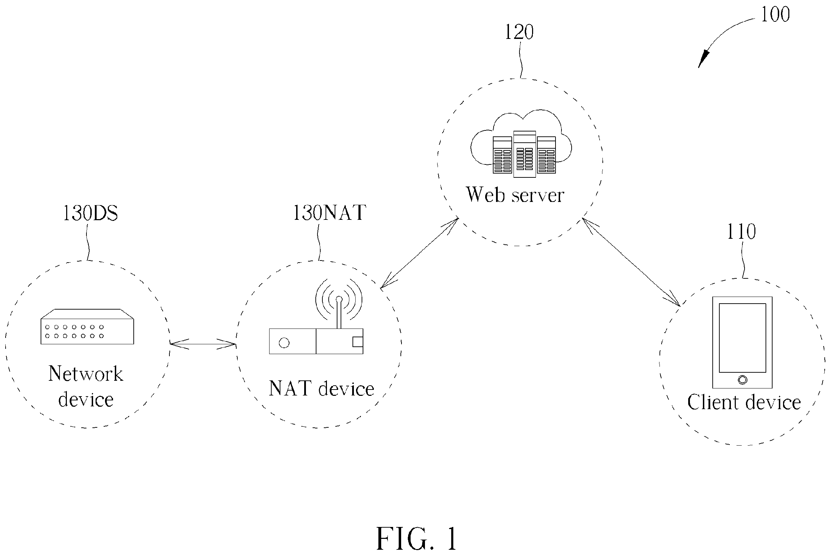

FIG. 1 is a diagram of a network system 100 according to an embodiment of the present invention, in which the client device 110 may represent any of the plurality of client devices, the web server 120 may represent the above-mentioned web server, and the network device 130DS may represent any of the plurality of network devices. A control apparatus of the control apparatuses may include at least one portion (e.g. a portion or all) of the web server 120, such as an internal circuit of the web server 120 or the whole of the web server 120. For example, this internal circuit may be utilized for controlling operations of the web server 120. This control apparatus may control the client device 110 to access the network device 130DS, and may assist the client device 110 to establish a network connection between the client device 110 and the network device 130DS in the best way corresponding to the current environment. Furthermore, another control apparatus within the control apparatuses may include at least one portion (e.g. a portion or all) of the client device 110, such as an internal circuit of the client device 110 or the whole of the client device 110, in which this internal circuit may be utilized for controlling operations of the client device 110 to access the network device 130DS. Regardless of the user's location, as long as there is a network service, the client device 110 is capable of obtaining the above-mentioned best way of establishing the network connection (with aid of the web server 120).

The Network Address Translate (NAT) device 130NAT is illustrated in FIG. 1 for highlighting the advantages provided by the communications architecture of the present invention. In this embodiment, the network device 130DS is in the same intranet to which the NAT device 130NAT belongs. In an embodiment, the NAT device 130NAT may be implemented with a router. The client device 110 may be positioned in the intranet, or external to the intranet. For example, after the client device 110 passes the identification (ID) verification of the intranet, the client device 110 may link to an extranet. At this moment, the client device 110 is positioned in the intranet to which the NAT device 130NAT belongs. As the user of the client device 110 moves, the client device 110 may not always be positioned in the intranet. For example, when the client device 110 (e.g. a smart phone) moves out of a wireless communications range provided by a wireless router, the client device 110 may surf the Internet using the service provided by a telecommunications provider. In this situation, the client device 110 is certainly not in the same intranet to which the NAT device 130NAT belongs.

Based on the communications architecture of the present invention, the web server 120 may perform a series of preparation operations regarding the network device 130DS, and perform network connection test operations respectively corresponding to various network connection strategies to obtain feasibility information of the network connection strategies of the network device 130DS. The communications architecture of the present invention may allow the client device 110 to refer to the feasibility information to select a current network connection strategy most suitable for the client device 110 to connect to the network device 130DS, without the need for trial and error. The client device 110 may refer to the current most suitable network connection strategy (e.g. the best one within multiple workable strategies, such as the network connection strategy with highest feasibility or efficiency) of the client device 110 to directly establish a network connection between the client device 110 and the network device 130DS.

In one embodiment, when the client device is connected to the network device, the client device will not be limited by the security limitations of the browser. For example, after the network connection test operations corresponding to various network connection strategies are performed upon the network device 130DS and the web server 120, it is not necessary for the user of each client device to preinstall any certificate for connecting to any of the network devices. Hence, the communications architecture implemented by the method and the control apparatuses of the present invention can improve the user experience.

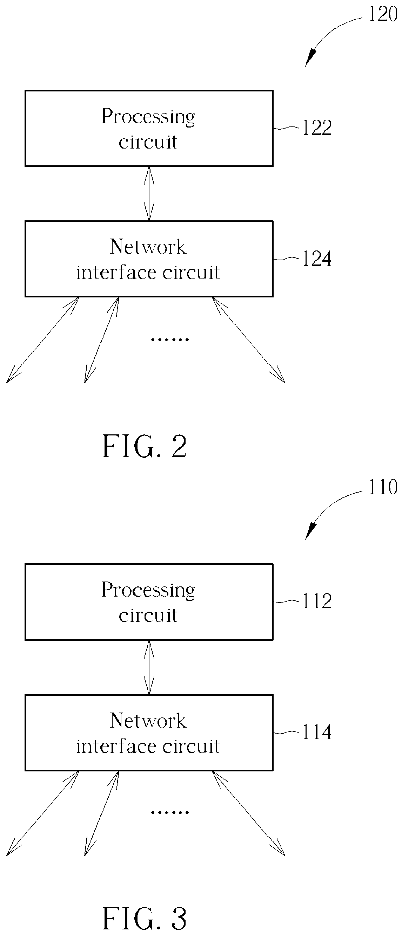

FIG. 2 illustrates some implementation details of the web server 120 shown in FIG. 1 according to an embodiment of the present invention. As shown in FIG. 2, the web server 120 may include the processing circuit 122 and the network interface circuit 124, where the processing circuit 122 and the network interface circuit 124 are coupled to each other, and are both positioned in the web server 120. According to this embodiment, the network interface circuit 124 may provide network services to the web server 120 (especially the processing circuit 122 therein), to allow the web server 120 to perform communications operations with various devices (e.g. the client device 110, the network device 130DS and the NAT device 130NAT) in the network system 100 through one or more communications channels. For example, after obtaining the Internet Protocol (IP) address of the web server 120, the client device 110 may link to the web server 120 to establish the communications channel between the client device 110 and the web server 120. In another example, after obtaining the IP address of the network device 130DS, the web server 120 may link to the network device 130DS to establish the communications channel between the web server 120 and the network device 130DS. The communications operations may be performed based on at least one predetermined protocol (e.g. one or more predetermined protocols), such as one or more of various existing network protocols. Examples of the existing network protocols may include (but are not limited to): a portion or all of the protocols in the Internet Protocol Suite (IPS) (which may sometimes be referred to as Transmission Control Protocol/Internet Protocol (TCP/IP)), such as the Transmission Control Protocol (TCP), the User Datagram Protocol (UDP), etc.

The processing circuit 122 may control operations of the web server 120. The processing circuit 122 may include one or more processors, which may execute at least one predetermined program module to control the operations of the web server 120. This is merely for illustrative purposes, and is not a limitation of the present invention. In some embodiments, the implementation of the processing circuit 122 may vary. For example, the processing circuit 122 may be implemented as an Application-Specific Integrated Circuit (ASIC) to control the operations of the web server 120 according to the above method for controlling a client device to access a network device.

In some embodiments, the internal circuit in the web server 120 may include the processing circuit 122. In some embodiments, the internal circuit in the web server 120 may include the processing circuit 122 and the network interface circuit 124.

FIG. 3 illustrates some implementation details of the client device 110 shown in FIG. 1 according to an embodiment of the present invention. As shown in FIG. 3, the client device 110 may include a processing circuit 112 and a network interface circuit 114, in which the processing circuit 112 and the network interface circuit 114 are coupled to each other and both positioned in the client device 110. According to this embodiment, the network interface circuit 114 may provide network services to the client device 110 (especially the processing circuit 112 therein), to allow the client device 110 to perform communications operations with various devices (e.g. the web server 120, the network device 130DS and the NAT device 130NAT) in the network system 100 through one or more communications channels. For example, after obtaining the IP address of the web server 120, the client device 110 may link to the web server 120 to establish the communications channel between the client device 110 and the web server 120. In another example, after obtaining the IP address of the network device 130DS, the client device 110 may link to the network device 130DS to establish the communications channel between the client device 110 and the network device 130DS. The communications operations may be performed based on at least one predetermined protocol (e.g. one or more predetermined protocols), such as one or more of the above-mentioned existing network protocols.

The processing circuit 112 may control operations of the client device 110. For example, the processing circuit 112 may include one or more processors for executing at least one predetermined program module, in order to control operations of the client device 110. This is merely for illustrative purposes, and is not a limitation of the present invention. In some embodiments, the implementation of the processing circuit 112 may vary. For example, the processing circuit 112 may be implemented as an ASIC to control the operations of the client device 110 according to the method.

In some embodiments, the internal circuit of the client device 110 may include the processing circuit 112. In another embodiment, the internal circuit of the client device 110 may include the processing circuit 112 and the network interface circuit 114.

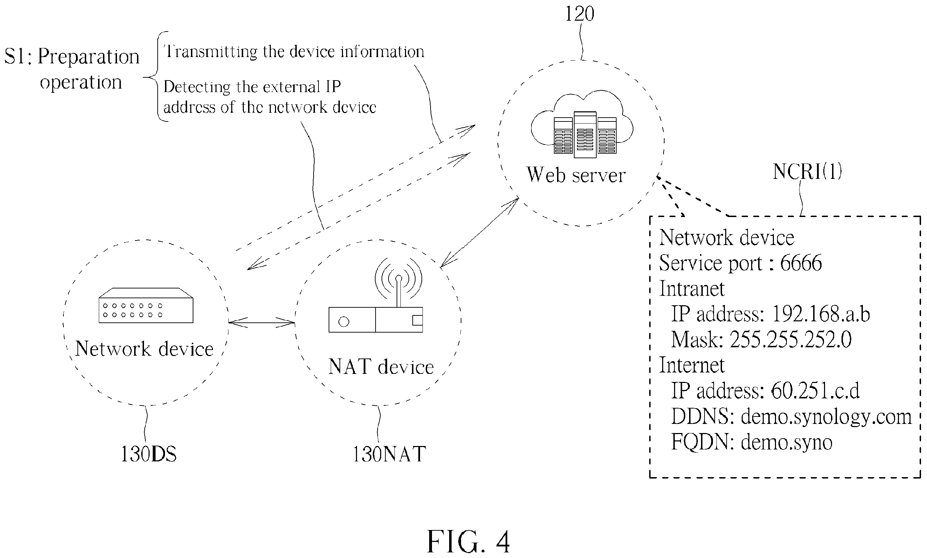

FIG. 4 illustrates some preparation operations of the method for controlling a client device to access a network device according to an embodiment of the present invention. In Step S1, the processing circuit 122 may control the web server 120 to perform at least one preparation operation regarding the network device 130DS to obtain the network connection reference information NCRI(1) of the network device 130DS. In this embodiment, the network device 130DS may transmit its device information to the web server 120. The above-mentioned at least one preparation operation may include: receiving the device information from the network device 130DS, and detecting at least one IP address of the network device 130DS, in which the network connection reference information NCRI(1) may include the device information and the IP address. The preparation operation may further include: triggering the network device 130DS to transmit the device information in order to receive the device information from the network device 130DS.

In this embodiment, the device information may include: an intranet IP address, a port number of a service port, and a network mask. As shown in FIG. 4, regarding the device information of the network device 130DS, the port number of the service port may be "6666", the intranet IP address may be "192.168.a.b", and the network mask may be "255.255.252.0", in which the symbol "a" may represent an integer in the interval [0, 255], and the symbol "b" may represent an integer in the interval [0, 255]. In some embodiments, the device information may vary. For example, the intranet IP address may be any intranet IP address conforming to a corresponding rule, the port number of the service port may be the port number of any available service port, and the network mask may be any network mask conforming to a corresponding rule. Further, the above-mentioned at least one IP address of this embodiment may include an external IP address. When detecting the IP address of the network device 130DS, the processing circuit 122 may refer to a packet from the network device 130DS to detect the external IP address of the network device 130DS. As shown in FIG. 4, the network connection reference information NCRI(1) may include the publicly known device information of the network device 130DS (e.g. the device information that is public on the Internet), such as the external IP address, a Dynamic Domain Name Server (DDNS) of the network device 130DS, and a Fully Qualified Domain Name (FQDN) of the network device 130DS. For example, the external IP address may be "60.251.c.d", the DDNS may be "demo.synology.com", and the FQDN may be "demo.syno", in which the symbol "c" may represent an integer in the interval [0, 255], and the symbol "d" may represent an integer in the interval [0, 255]. In some embodiments, the external IP address, the DDNS and the FQDN may vary. The external IP address may be any preregistered external IP address, the DDNS may be any preregistered DDNS, and the FQDN may be any preregistered FQDN.

In some embodiments, the preparation operation may further include: detecting at least one of the DDNS and the FQDN of the network device 130DS (e.g. the DDNS and/or the FQDN), in which the network connection reference information NCRI(1) may include at least one of the DDNS and the FQDN mentioned above. In some embodiments, the network connection reference information NCRI(1) may be dynamically modified and/or updated when needed.

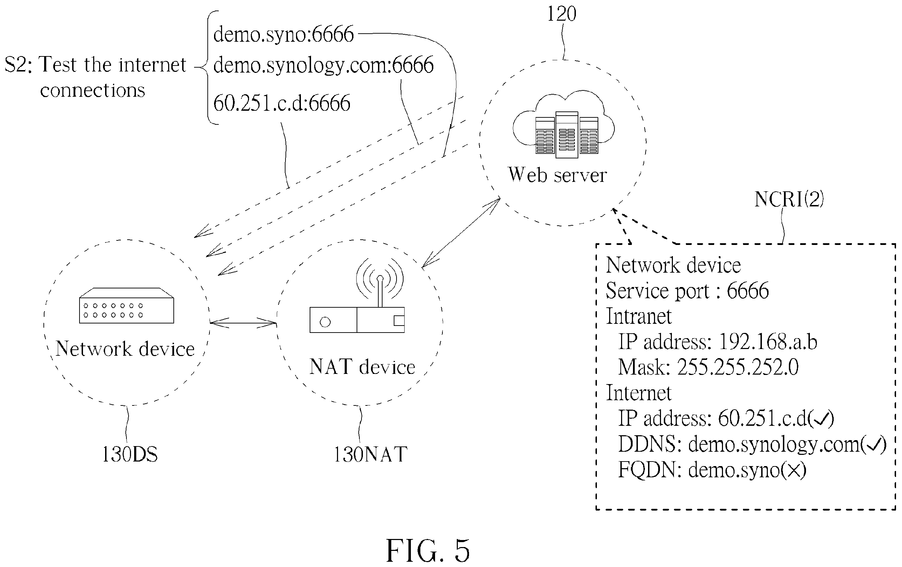

FIG. 5 illustrates a connection test operation of the method according to an embodiment of the present invention. In Step S2, the processing circuit 122 may control the web server 120 to test the Internet connection. Based on the network connection reference information NCRI(1) shown in FIG. 4, the processing circuit 122 may control the web server 120 to perform a plurality of network connection test operations upon the network device 130DS according to a plurality of network connection strategies, respectively, to generate a plurality of test results respectively corresponding to the network connection strategies, in which at least one test result in the test results indicates feasibility of at least one of the network connection strategies. According to this embodiment, the network connection strategies may include an external IP address strategy, a DDNS strategy and a FQDN strategy. Under the control of the processing circuit 122, when performing the network connection test operations, the web server 120 performs the network connection test operation corresponding to the external IP address strategy, the network connection test operation corresponding to the DDNS strategy and the network connection test operation corresponding to the FQDN strategy. The network connection reference information NCRI(1) shown in FIG. 4 may include the port number "6666" of the service port of the network device 130DS. As shown in FIG. 5, the processing circuit 122 may control the web server 120 to perform the network connection test operations. The network connection test operations may comprise the network connection tests of "demo.syno:6666", "demo.synology.com:6666" and "60.251.c.d:6666", in which each of the series of requests may carry the port number "6666" of the service port.

The processing circuit 122 may update the network connection reference information NCRI(1)to generate the network connection reference information NCRI(2). The network connection reference information NCRI(2) may include the network connection reference information NCRI(1), and may further include the feasibility information respectively corresponding to the network connection strategies, such as the test results. For better comprehension, the symbol "√" may represent a network connection strategy that is currently suitable for the client device 110 (e.g. if a corresponding test result indicates that the test result is successful, it means the network connection strategy can currently be adopted by the client device 110), and the symbol "X" may represent a network connection strategy not currently suitable for the client device 110 (e.g. a corresponding test result indicates that the network connection strategy currently cannot be adopted by the client device 110, because the test result is not successful). In this embodiment, the test results of the IP address "60.251.c.d" and the DDNS "demo.synology.com" are successful, and the test result of the FQDN "demo.syno" is not successful. In some embodiments, the test results may vary.

In some embodiments, the network connection strategies and the network connection test operations may vary. One or more of the external IP address strategy, the DDNS strategy and the FQDN strategy may be omitted, and, within the network connection test operations, one or more connection test operations corresponding to one or more strategies may be omitted.

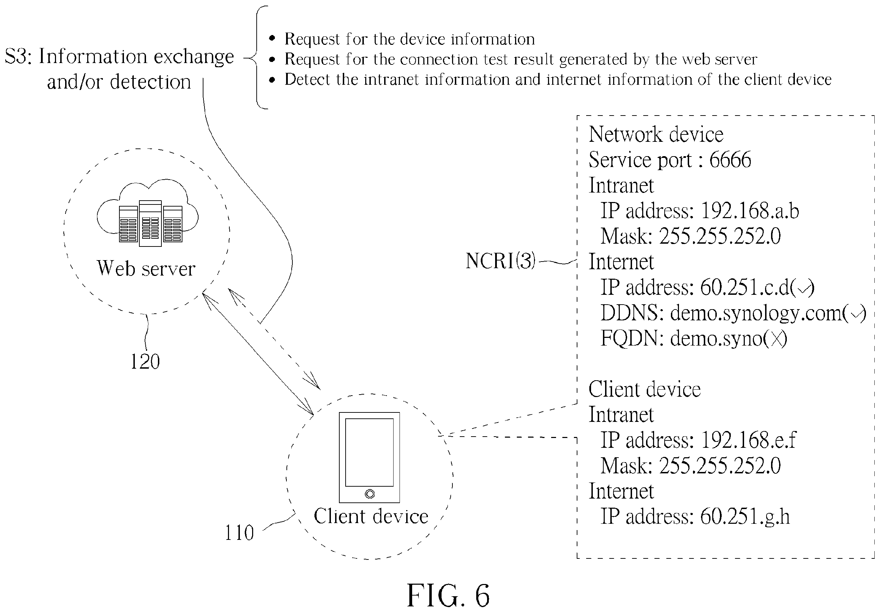

FIG. 6 illustrates some implementation details of the method according to an embodiment of the present invention. In Step S3, at least one of the web server 120 and the client device 110 (e.g. the web server 120 and/or the client device 110) may perform information exchange to make the client device 110 obtain the network connection reference information NCRI(3). According to this embodiment, the processing circuit 112 may control the client device 110 to request at least one portion (e.g. a portion or all) of the network connection reference information NCRI(2), such as the device information of the network device 130DS and the connection test result generated by the web server 120. As a result, the processing circuit 122 may control the web server 120 to provide the client device 110 with the network connection reference information NCRI(2) to allow the client device 110 to establish a network connection between the client device 110 and the network device 130DS according to an optimal strategy within a set of strategies, in which the set of strategies include the network connection strategies. For example, within the set of strategies, the optimal strategy may be better than most of the other strategies and may be more suitable for the client device 110. In addition to the network connection strategies, the set of strategies may further include a same-intranet network connection strategy. If the client device 110 and the network device 130DS are in the same intranet, the same-intranet network connection strategy will be selected as the optimal strategy; otherwise, a network connection strategy within the network connection strategies will be selected as the optimal strategy. According to this embodiment, one of the web server 120 and the client device 110 may detect whether the client device 110 and the network device 130DS are in the same intranet.

For example, the network connection reference information NCRI(2) previously obtained by the web server 120 may include the intranet information of the network device 130DS (e.g. the intranet IP address "192.168.a.b" and the network mask "255.255.252.0") and the Internet information of the network device 130DS (e.g. the external IP address "60.251.c.d"). Further, the web server 120 may detect the intranet information of the client device 110 (e.g. the intranet IP address "192.168.e.f" and the network mask "255.255.252.0", in which the symbol "e" may represent an integer in the interval [0, 255], and the symbol "f" may represent an integer in the interval [0, 255]) and the Internet information of the client device 110 (e.g. the external IP address "60.251.g.h", in which the symbol "g" may represent an integer in the interval [0, 255], and the symbol "h" may represent an integer in the interval [0, 255]). According to the intranet information and Internet information of the client device 110 and the intranet information and Internet information of the network device 130DS, the web server 120 may detect whether the client device 110 and the network device 130DS are in the same intranet.

In another example, the network connection reference information NCRI(3) obtained by the client device 110 may also include the network connection reference information NCRI(2), and may further include the intranet information of the client device 110 (e.g. the intranet IP address "192.168.e.f" and network mask "255.255.252.0") and the Internet information of the client device 110 (e.g. external IP address "60.251.g.h"). According to the intranet information and Internet information of the client device 110 and the intranet information and Internet information of the network device 130DS, the client device 110 may detect whether the client device 110 and the network device 130DS are in the same intranet.

Regarding whether the client device 110 and the network device 130DS are in the same intranet, some implementation details are described as follows. If the external IP address "60.251.g.h" of the client device 110 is equivalent to the external IP address "60.251.c.d" of the network device 130DS, and the identifier of the client device 110 (e.g. this identifier may be obtained by performing bitwise AND operations upon the binary value of the intranet IP address "192.168.e.f" and the binary value of the corresponding network mask "255.255.252.0") is equivalent to the identifier of the network device 130DS (e.g. this identifier may be obtained by performing bitwise AND operations upon the binary value of the intranet IP address "192.168.a.b" and the binary value of the corresponding network mask "255.255.252.0"), the client device 110 and the network device 130DS are determined as being in the same intranet ; otherwise, the client device 110 and the network device 130DS are determined as not being in the same intranet. In various embodiments, the above determination can be performed by the client device 110 or the web server 120. For example, one of the client device 110 and the web server 120 may perform the above determination, and correspondingly decide whether the same-intranet network connection strategy should be selected as the optimal strategy. In another example, one of the client device 110 and the web server 120 may perform the above determination, and the other of the client device 110 and the web server 120 may obtain the determination from the information exchanged between the client device 110 and the web server 120, and correspondingly decide whether the same-intranet network connection strategy should be selected as the optimal strategy.

In some embodiments, the processing circuit 122 may control the web server 120 to provide the client device 110 with the test results to allow the client device 110 to select the optimal strategy from the set of strategies at least according to the test results. The processing circuit 122 may control the web server 120 to provide the client device 110 with the intranet IP address of the network device 130DS and the corresponding network mask for allowing the client device 110 to determine whether the client device 110 and the network device 130DS are in the same intranet at least according to the intranet IP address and the network mask. If the client device 110 and the network device 130DS are in the same intranet, the client device 110 selects the same-intranet network connection strategy as the optimal strategy; otherwise, the client device 110 select a network connection strategy from the network connection strategies as the optimal strategy according to the test results.

In some embodiments, the processing circuit 122 may control the web server 120 to select the optimal strategy from the set of strategies at least according to the test results. For example, the processing circuit 122 may control the web server 120 to determine whether the client device 110 and the network device 130DS are in the same intranet at least according to the intranet IP address of the network device 130DS and the corresponding network mask. If the client device 110 and the network device 130DS are in the same Intranet, the web server 120 selects the same-intranet network connection strategy as the optimal strategy; otherwise, the web server 120 selects a network connection strategy from the network connection strategies as the optimal strategy according to the test results.

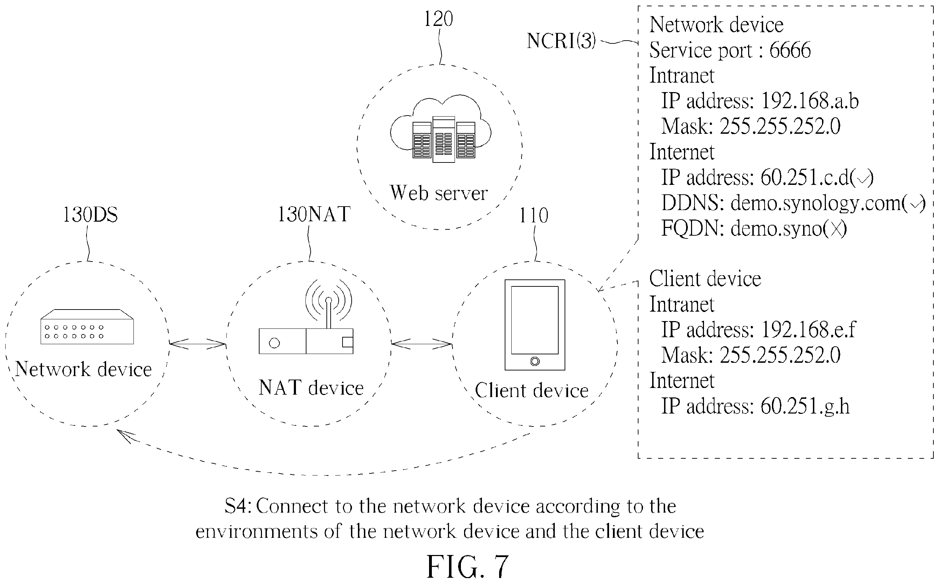

FIG. 7 illustrates a network connection operation of the method according to an embodiment of the present invention. In Step S4, the client device 110 may connect to the network device 130DS according to the environment of the network device 130DS and the client device 110. According to this embodiment, the network connection reference information NCRI(3) obtained by the client device 110 may include the network connection reference information NCRI(2), and may further include the intranet information of the client device 110 (e.g. the intranet IP address "192.168.e.f" and network mask "255.255.252.0") and the Internet information of the client device 110 (e.g. external IP address "60.251.g.h"). For example, the external IP address "60.251.g.h" of the client device 110 may be equivalent to the external IP address "60.251.c.d" of the network device 130DS, and the identifier of the client device 110 may be equivalent to the identifier of the network device 130DS. As a result, the processing circuit 112 may detect that the client device 110 and the network device 130DS are in the same intranet, and control the client device 110 to directly communicate with the network device 130DS. In another example, the external IP address "60.251.g.h" of the client device 110 may not be equivalent to the external IP address "60.251.c.d" of the network device 130DS, or the identifier of the client device 110 may not be equivalent to the identifier of the network device 130DS. As a result, the processing circuit 112 may detect that the client device 110 and the network device 130DS are not in the same intranet, and control the client device 110 to select a network connection strategy from the network connection strategies as the optimal strategy according to the test results, and establish the network connection according to the optimal strategy in order to access the network device 130DS.

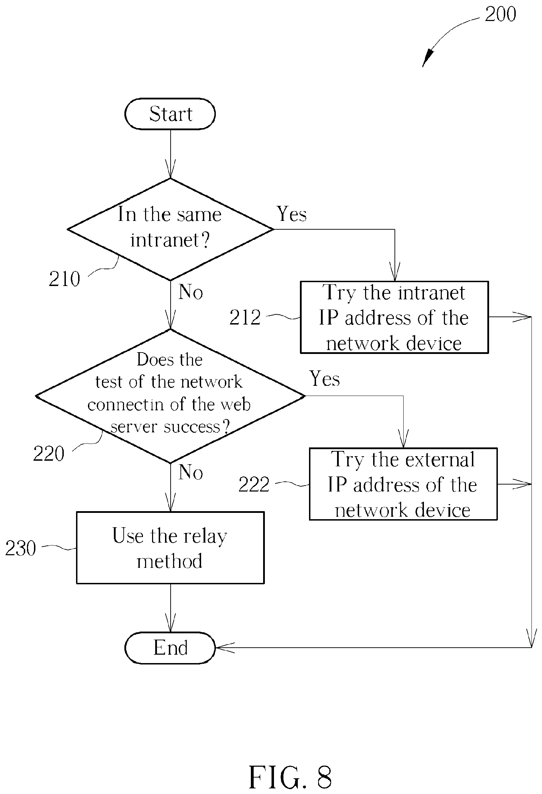

FIG. 8 illustrates a work flow 200 of the method according to an embodiment of the present invention. The operations in Steps 210, 212, 220 and 222 may be implemented according to one or more corresponding operations which are described in the above embodiments.

In Step 210, one of the web server 120 and the client device 110 may detect whether the client device 110 and the network device 130DS are in the same intranet. When the client device 110 and the network device 130DS are in the same intranet, the flow goes to Step 212; otherwise, the flow goes to Step 220.

In Step 212, the client device 110 may try the intranet IP address of the network device 130DS. For example, according to the same-intranet network connection strategy, the processing circuit 112 may control the client device 110 to directly communicate with the network device 130DS.

In Step 220, the client device 110 may check whether the network connection test of the web server 120 is successful. According to the test results, the client device 110 may learn whether the network connection test operations performed on the web server 120 are successful or not, respectively. In this embodiment, the success of one or more network connection test operations may represent that the network connection test of the web server 120 is successful. When the network connection test of the web server 120 is successful (e.g. any of the network connection test operations is successful), the flow goes to Step 222; otherwise, the flow goes to Step 230.

In Step 222, the client device 110 may try the external IP address of the network device 130DS. For example, according to the network connection strategy selected as the optimal strategy among the network connection strategies, the processing circuit 112 may control the client device 110 to establish the network connection to access the network device 130DS.

In Step 230, with the aid of the web server 120, the client device 110 may use a relay method to access the network device 130DS. For example, the web server 120 may include the functions of the relay server to relay packets between the client device 110 and the network device 130DS.

According to this embodiment, since the communications efficiency of the relay method is typically lower than the communications efficiency of the network connection strategies, the relay method may be set as the last option of the set of strategies, such as the option corresponding to the lowest priority. Further, since the communications efficiency of the same-intranet network connection strategy is typically higher than the communications efficiency of the network connection strategies, the same-intranet network connection strategy may be set as the first option of the set of strategies, such as the option corresponding to the highest priority.

In some embodiments, the user of the client device 110 may decide his/her own preference network connection mode, and the client device 110 may select the optimal strategy from the set of strategies based on the user preference settings. For example, the user may set the client device 110 to apply a HyperText Transfer Protocol Secure (HTTPS) request only. In another example, the user may set the client device 110 to preferentially apply the DDNS, rather than the external IP address.

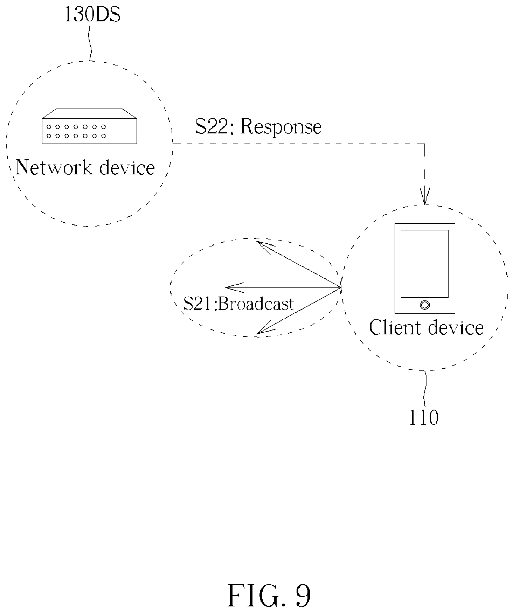

FIG. 9 illustrates a network connection operation of the method according to another embodiment of the present invention. In Step S21, according to the same-intranet network connection strategy, the processing circuit 112 may control the client device 110 to perform at least one broadcast operation in order to directly communicate with the network device 130DS. In Step S22, in response to the broadcast operation, the network device 130DS sends a response packet to the client device 110. As a result, the client device 110 may directly communicate with the network device 130DS.

In some embodiments, the web server 120 may provide the client device 110 with the network connection reference information NCRI(2), and the network connection reference information NCRI(3) obtained by the client device 110 may include the network connection reference information NCRI(2). As the firewall of one of the client device 110 and the network device 130DS may have special settings, the web server 120 may leave the selection of the optimal strategy to the client device 110.

All combinations and sub-combinations of above-described features also belong to the invention.

## Claims

1. A method for controlling a client device (110) to access a network device (130DS), the method being applicable to an electronic device (120), **characterized in that** the method comprises:
performing at least one preparation operation regarding the network device (130DS) to obtain network connection reference information of the network device (130DS);
based on the network connection reference information, performing a plurality of network connection test operations upon the network device (130DS) according to a plurality of network connection strategies, respectively, to generate a plurality of test results respectively corresponding to the network connection strategies, wherein at least one test result of the test results indicates feasibility of at least one of the network connection strategies; and
providing the client device (110) with at least one portion of the network connection reference information to allow the client device (110) to establish a network connection between the client device (110) and the network device (130DS) according to an optimal strategy within a set of strategies, wherein the set of strategies comprise the network connection strategies.

2. The method of claim 1, **characterized in that** the network device (130DS) transmits device information of the network device (130DS) to the electronic device (120); and the preparation operation comprises:
receiving the device information from the network device (130DS), wherein the network connection reference information comprises the device information; and
detecting at least one Internet Protocol (IP) address of the network device (130DS), wherein the network connection reference information comprises the IP address.

3. The method of claim 2, **characterized in that** the preparation operation further comprises:
triggering the network device (130DS) to transmit the device information, in order to receive the device information from the network device (130DS).

4. The method of claim 2, **characterized in that** the IP address comprises an external IP address; and the step of detecting the IP address of the network device (130DS) further comprises:
detecting the external IP address of the network device (130DS) according to a packet from the network device (130DS).

5. The method of claim 4, **characterized in that** the preparation operation further comprises:
detecting at least one of a Dynamic Domain Name Server (DDNS) of the network device (130DS) and a Fully Qualified Domain Name (FQDN) of the network device (130DS), wherein the network connection reference information comprises at least one of the DDNS and the FQDN.

6. The method of claim 2, **characterized in that** the device information comprises: an intranet IP address, a port number of a service port, and a network mask.

7. The method of claim 1, **characterized in that** the network connection reference information comprises an external Internet Protocol (IP) address of the network device (130DS), a Dynamic Domain Name Server (DDNS) of the network device (130DS), and a Fully Qualified Domain Name (FQDN) of the network device (130DS); the network connection strategies comprise an external IP address strategy, a DDNS strategy and an FQDN strategy; and the step of performing the network connection test operations further comprises:
performing a network connection test operation corresponding to the external IP address strategy;
performing a network connection test operation corresponding to the DDNS strategy; and
performing a network connection test operation corresponding to the FQDN strategy.

8. The method of claim 7, **characterized in that** the network connection reference information comprises a port number of a service port of the network device (130DS); and the step of performing the network connection test operations further comprises:
performing the network connection test operation corresponding to the external IP address strategy according to the external IP address and the port number;
performing the network connection test operation corresponding to the DDNS strategy according to name information of the DDNS and the port number; and
performing the network connection test operation corresponding to the FQDN strategy according to the FQDN and the port number.

9. The method of claim 1, **characterized in that** in addition to the network connection strategies, the set of strategies further comprise a same-intranet network connection strategy; and if the client device (110) and the network device (130DS) are in a same intranet, the same-intranet network connection strategy is selected as the optimal strategy; otherwise, a network connection strategy within the network connection strategies is selected as the optimal strategy.

10. The method of claim 9, **characterized in that** the network connection reference information comprises an intranet Internet Protocol (IP) address of the network device (130DS) and a network mask of the network device (130DS); and the method further comprises:
detecting whether the client device (110) and the network device (130DS) are in the same intranet at least according to an intranet IP address of the client device (110), a network mask of the client device (110), the intranet IP address of the network device (130DS), and the network mask of the network device (130DS); or
providing the client device (110) with the intranet IP address of the network device (130DS) and the network mask of the network device (130DS), to allow the client device (110) to detect whether the client device (110) and the network device (130DS) are in the same intranet at least according to the intranet IP address of the client device (110), the network mask of the client device (110), the intranet IP address of the network device (130DS), and the network mask of the network device (130DS).

11. The method of claim 1, **characterized in that** the method further comprises:
providing the test results to the client device (110) to allow the client device (110) to select the optimal strategy from the set of strategies at least according to the test results.

12. The method of claim 11, **characterized in that** in addition to the network connection strategies, the set of strategies further comprises a same-intranet network connection strategy; and the method further comprises:
providing the client device (110) with an intranet Internet Protocol (IP) address of the network device (130DS) and a network mask of the network device (130DS), to allow the client device (110) to determine whether the client device (110) and the network device (130DS) are in a same intranet at least according to the intranet IP address and the network mask;
wherein if the client device (110) and the network device (130DS) are in the same intranet, the client device (110) selects the same-intranet network connection strategy as the optimal strategy; otherwise, the client device (110) selects a network connection strategy from the network connection strategies as the optimal strategy according to the test results.

13. The method of claim 1, **characterized in that** the method further comprises:
selecting the optimal strategy from the set of strategies at least according to the test results.

14. The method of claim 13, **characterized in that** in addition to the network connection strategies, the set of strategies further comprises a same-intranet network connection strategy; and the method further comprises:
determining whether the client device (110) and the network device (130DS) are in a same intranet at least according to an intranet Internet Protocol (IP) address of the network device (130DS) and a network mask of the network device (130DS); and
when the client device (110) and the network device (130DS) are in the same intranet, selecting the same-intranet network connection strategy as the optimal strategy; otherwise, selecting a network connection strategy from the network connection strategies as the optimal strategy according to the test results.

15. A control apparatus (120, 122), for controlling a client device (110) to access a network device (130DS), **characterized in that** the control apparatus (120, 122) comprises:
a processing circuit (122), positioned in an electronic device (120), the processing circuit (122) arranged to control operations of the electronic device (120), wherein the processing circuit (122) controls the electronic device (120) to perform at least one preparation operation regarding the network device (130DS) in order to obtain network connection reference information of the network device (130DS);
wherein, based on the network connection reference information, the processing circuit (122) controls the electronic device (120) to perform a plurality of network connection test operations upon the network device (130DS) according to a plurality of network connection strategies, respectively, to generate a plurality of test results respectively corresponding to the network connection strategies, wherein at least one test result within the test results indicates feasibility of at least one of the network connection strategies; and
wherein the processing circuit (122) controls the electronic device (120) to provide the client device (110) with at least one portion of the network connection reference information, to allow the client device (110) to establish a network connection between the client device (110) and the network device (130DS) according to an optimal strategy within a set of strategies, wherein the set of strategies comprise the network connection strategies.
